Europäisches Patentamt

European Patent Office

Office européen des brevets

(11) Veröffentlichungsnummer: **0 428 031 B1**

(12) **EUROPÄISCHE PATENTSCHRIFT**

(45) Veröffentlichungstag der Patentschrift: **02.03.94**

(21) Anmeldenummer: **90121102.9**

(22) Anmeldetag: **03.11.90**

(51) Int. Cl.⁵: **A61C 1/00**, A61L 2/20

(54) **Dentaleinheit.**

(30) Priorität: **11.11.89 DE 3937578**

(43) Veröffentlichungstag der Anmeldung:
**22.05.91 Patentblatt 91/21**

(45) Bekanntmachung des Hinweises auf die
Patenterteilung:
**02.03.94 Patentblatt 94/09**

(84) Benannte Vertragsstaaten:
**AT CH DE FR IT LI SE**

(56) Entgegenhaltungen:
**EP-A- 0 040 946**
**EP-A- 0 286 870**
**DE-A- 2 938 517**
**DE-A- 3 629 010**

(73) Patentinhaber: **Dr. J. Hänsler GmbH**
**Nordring 8**
**D-76473 Iffezheim(DE)**

(72) Erfinder: **Viebahn-Hänsler geb. Hänsler, Renate, Dr. rer. nat**
**Nordring 10**
**W-7557 Iffezheim(DE)**
Erfinder: **Busch, Karl-Heinz**
**Tullastrasse 4**
**W-7559 Au/Rein(DE)**
Erfinder: **Beck, Ernst Gerhard, Prof. Dr. med.**
**Löwenweg 7**
**W-6301 Wettenberg(DE)**

(74) Vertreter: **Huss, Carl-Hans, Dipl.-Ing.**
**Patentanwalt,**
**Postfach 14 54**
**D-82454 Garmisch-Partenkirchen (DE)**

**Beschreibung**

Behandlungseinheiten für Zahnärzte, nachfolgend "Dentaleinheiter" genannt, zeigen an den möglichen Wasserentnahmestellen, z.B. also am Bohrer, an der Turbine, am Püster usw., starke Verkeimung. Die Quelle dieser Verkeimung kann das Leitungswasser selbst oder ein vorgeschalteter Ionenaustauscher als Brutstätte für die verschiedensten Keime (Bakterien, Pilze, Sporen) sein. Ursache ist aber häufig auch das Leitungssystem, das z.B. in T- und Kniestücken sowieso, aber insbesondere bei heutzutage üblicher Verwendung von Kunststoffen ein gutes Wachstumsmilieu darstellt, weil häufig Bestandteile derselben einen Nährboden für Keime darstellen. Schließlich können beim Beenden des Arbeitsablaufes, d.h. Abstellen eines Handstückes, z.B. des Bohrers, durch leichten Unterdruck pathologische Keime von Patienten in das Schlauchsystem gelangen,wie Hepatitis A- oder B-Viren, Herpesviren, HIV usw. Weitere kritische Stellen bilden Entkeimungsfilter, Umkehrosmose usw.

Bei der Verkeimung der Wasserwege in einer Dentaleinheit handelt es sich überwiegend um Pseudomonas aeruginosa, um Pseudomonaden der Fluorescenz-Gruppe und Legionellen; weiterhin wurden alcaligenes faecalis, Flavobakterien und Eschericia coli nachgewiesen (BECK und SCHMIDT 1986, J. BORNEFF 1988, BOTZENHART und HEROLD 1988).

Die Senkung der Keimzahlen auf gesetzlich erlaubte Werte mit weniger als 100 koloniebildenden Einheiten/ml ist nach den Erfahrungen der Praxis nur durch eine kontinuierliche Desinfektion des Wassers möglich. Eine einmalige Sanierung der Geräte durch chemische Desinfektionsmittel oder Wasserdampf kann keinen dauerhaften Effekt haben, weil immer wieder Keime aus dem Wasser oder von der Patientenseite nachgeliefert werden.

Desinfektionsmittel, die sämtliche Keime abtöten oder inaktivieren und gleichzeitig rückstandsfrei sind bzw. die das Wasser so keimarm machen, daß man praktisch von "keimfrei" sprechen kann, sind nicht bekannt. Übliche Desinfektionsmittel sind $H_2O_2/Ag^+$ oder die Chlorung.Um das in den Mund des Patienten,aber u.U. auch an die Hände des Zahnarztes und seiner Helferin gelangende Wasser so keimarm zu machen, daß man es praktisch als "keimfrei" bezeichnen kann, ohne daß das zur Keimarmmachung verwendete Mittel am Wasserausgang in Erscheinung tritt bzw. nur in einer gewünschten, zu bestimmenden geringen Konzentration, verwendet die Erfindung Ozon.

Die Entkeimung von Wasser mit Ozon ist bekannt, z.B. durch die EP-A-0 286 870. Bei dem in dieser Schrift beschriebenen und dargestellten System wird die Aufbereitung von z.B. einem Brunnen entnommenen organisch-biologisch belasteten Wasser in eine Vorbehandlung und eine Nachdesinfektion aufgeteilt. Die Vorbehandlungseinrichtung enthält in einem Gefäß einen Ozongenerator und eine Ozon/Wasser-Mischkammer, die zum größten Teil mit Füllkörpern aus Edelstahlblech gefüllt ist. In dieser Kammer wird das Wasser hoch dosiert mit Ozon angereichert, das danach in einen Mischbettfilter gelangt, der in Fließrichtung eine obere Schicht aus Granulaten verkokter Kohlesorten, eine mittlere Schicht aus Quarzsand und eine untere Schicht aus Grobkies enthält, wobei das Koksgranulat das reduzierende Milieu schafft, um das Ozon im Wasser zu entfernen. Nach dem Filtern gelangt das Wasser zur Nachbehandlung in eine Füllkörpersäule, die es von oben nach unten durchrieselt, eher es in einen Lagerbehälter überführt wird. Während der Filterung im Mischbettfilter bildet sich in seinem oberen, über der Schicht aus Koksgranulaten liegenden Teil ein Polster aus überschüssigem Ozon-Luft-Gemisch geringer Ozon-Konzentration und dieses Gas wird in die Leitung zwischen dem Mischbettfilter und der Nachbehandlungsfüllkörpersäule kurz vor dem Eintritt in diese Säule eingeleitet und gelangt so zusammen mit dem Wasser in den Nachdesinfektionsteil des Systems. Dieser Nachbehandlungseffekt läßt sich durch die Länge der Rieselstrecke in der Füllkörpersäule grob einstellen. Im gereinigten Wasser befindet sich dann ein zwar niedriger aber vorhandener Rest-Ozongehalt. Die Entkeimung organisch-biologisch belasteten z.B. einem Brunnen entnommenen Wassers findet also in zwei Stufen statt, wobei das Wasser in der ersten Stufe einen Mischbettfilter und in der zweiten Stufe weitgehend vorgereinigt, eine Füllkörpersäule durchläuft. In der ersten Stufe wird dem Wasser verhältnismäßig hoch dosiert Ozon zugeführt, das während des Durchlaufs durch den Mischbettfilter im Wasser vollständig vernichtet wird, aber außerhalb des eigentlichen Filters als ein Ozon-Luft-Gemisch geringer Konzentration verbleibt und von hier aus zur Nachdesinfektion der zweiten Stufe zugeleitet wird.

Der Erfindung lag die Aufgabe zugrunde, die bekannte Ozonentkeimung so weiter zu bilden und an die Erfordernisse einer Zahnbehandlung anzupassen, daß nur ein möglichst geringer Ozonanteil eingesetzt zu werden braucht und nach der Entkeimung der Restozongehalt im Normalfall gegen Null geführt werden kann und ein höherer Bestandteil nur für Ozon-Therapiefälle zur Verfügung steht. Diese Aufgaben löst die Erfindung mit den im Anspruch 1 definierten Mitteln. Zweckmäßige Ausgestaltungen und Weiterbildungen sind in den Unteransprüchen enthalten.

Ozon ist das stärkste praktisch anwendbare Oxidationsmittel; es tötet Viren, Bakterien, Pilze und zeigt sporizide Wirkung.

2

Der zur Desinfektion notwendige Konzentrationsbereich ist abhängig von

1. der Zerfallgeschwindigkeit des Ozons im wäßrigen Milieu

$$O_3 \rightarrow 3/2\ O_2\ ,$$

weiche bestimmt wird von
- der Temperatur,
- der Wasserqualität, Ionenstärke bzw. der organischen Verunreinigung und
- dem pH-Wert;

2. dem System, d.h. dem Zerfall des Ozons auf dem Transportweg des $O_3$-haltigen Wassers, wobei eine Abhängigkeit besteht von
- der Länge und dem Querschnitt des Schlauchsystems sowie
- dem Material der Schläuche, Ventile und Funktionsstücke.

Neben auto- und heterokatalytischem Zerfall vermindert sich die Ozonkonzentration durch Ozonzehrung aufgrund chemischer Reaktionen mit diversen Wasserinhaltsstoffen.

Für eine wirksame Desinfektion hat sich ein Konzentrationsbereich von 5 bis 10 mg $O_3$/1 l $H_2O$ als günstig erwiesen, jedoch muß gleichzeitig die Ozonkonzentration an den Wasserentnahmestellen je nach Bedarf $c_{03} = 0$ bzw. $c_{03} \geq 0$ sein, d.h. bei normaler Behandlung möglichst niedrig und nur für eine gezielte Ozontherapie oder für die Desinfektion der Behandlungsgeräte einen gewissen Wert behalten.

Beispiel

Vergleich der desinfizierenden Wirkung von Ozonwasser und $H_2O_2$ in vitro bei 20 ° C.

Testkeim: Pseudonomas aeruginosa.

Konzentration: 3 * $10^9$ KBE/ml.

Verfahren: Quantitativer Suspensionstest, d.h. 100 ml des Desinfektionsmittels werden mit 1 ml Keimsuspension inkubiert. Sofort, nach einer Minute und nach 5 Minuten werden Proben entnommen und auf die noch vorhandene Keimzahl untersucht.

Konzentration des Desinfektionsmittels:

Ozonwasser       : 10 mg Ozon/1l Wasser

$H_2O_2$             : 50 mg $H_2O_2$/1l Wasser

Die Ergebnisse zeigt Tabelle 1.

Mit Ozonwasser tritt die desinfizierende Wirkung sofort ein, während sich $H_2O_2$ ebenso verhält wie das als Kontrolle gewählte aqua bidest. $H_2O_2$ zeigt hier per definitionem keine "Desinfektion".

Tabelle 1:

Vergleich der desinfizierenden Wirkung von Ozonwasser und $H_2O_2$ gegenüber aqua bidest als Kontrolle

AUSGANGSKEIMZAHL

| OZON-Wasser | $H_2O_2$ | aqua bidest. |
|---|---|---|
| $2 * 10^9$ KBE/ml | $2 * 10^9$ KBE/ml | $2 * 10^9$ KBE/ml |

VERSUCHSBEGINN

| OZON-Wasser | $H_2O_2$ | aqua bidest. |
|---|---|---|
| 0.0 KBE/ml | $4 * 10^9$ KBE/ml | $4 * 10^7$ KBE/ml |

NACH EINER MINUTE

| OZON-Wasser | $H_2O_2$ | aqua bidest. |
|---|---|---|
| 0.0 KBE/ml | $2 * 10^7$ KBE/ml | $2 * 10^7$ KBE/ml |

NACH FÜNF MINUTEN

| OZON-Wasser | $H_2O_2$ | aqua bidest. |
|---|---|---|
| 0.0 KBE/ml | $2 * 10^7$ KBE/ml | $2 * 10^7$ KBE/ml |

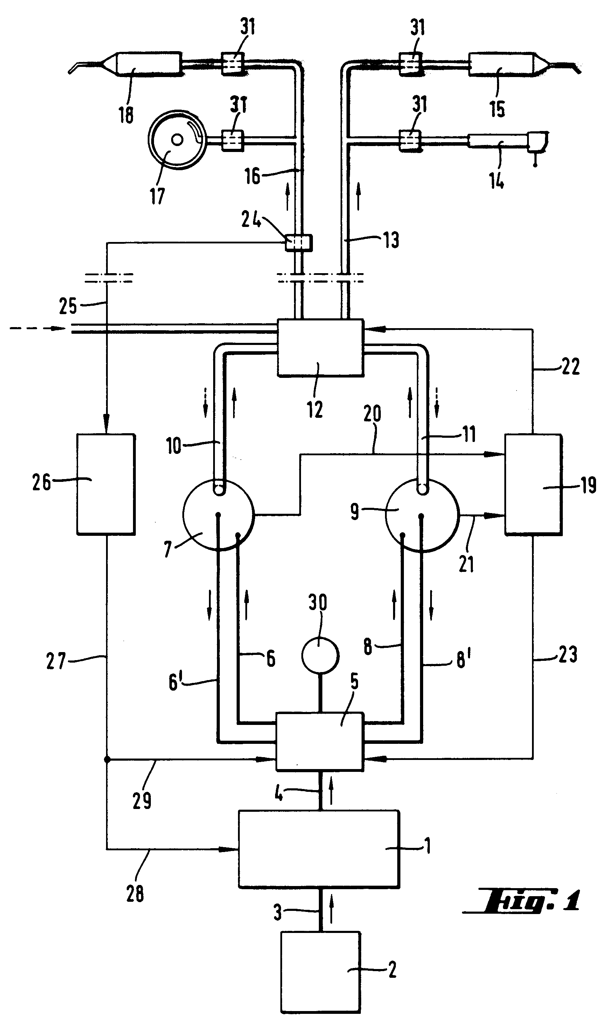

Am Beispiel einer den Wasser-, Gas- und Steuerleitungsplan einer Dentaleinheit schematisch darstellenden Figur 1 ist eine Ausführungsform der Erfindung nachstehend erläutert. Die Figuren 2 und 3 sind nachfolgend erläuterte Diagramme.

1 ist ein Ozonaggregat, das mit Sauerstoff oder Luft-$O_2$ aus einem Reaktionsgaserzeugungsgerät 2 über eine Leitung 3 gespeist wird. In dem Ozonaggregat 1 wird die eingespeiste Luft-$O_2$ oder der Sauerstoff teilweise in Ozon umgewandelt, wobei die Ozonkonzentration im Gas ($c_{O3}$/1l Gasgemisch) regelbar und auf die Konzentration im Wasserkreislauf abstimmbar ($c_{O3}$ in mg $O_3$/1l $H_2O$) ist. Aus dem Ozonaggregat 1 wird das Reaktionsgas über die Gasleitung 4 einem Steuerungsblock 5 zugeleitet und von diesem über die Gasleitung 6 in das Wasserreservoir 7 oder über die Leitung 8 in ein Wasserreservoir 9 abgegeben. Dabei ist die benötigte Ozonkonzentration systemabhängig und liegt etwa im Bereich von 5 bis 15 mg $O_3$/1l $H_2O$. Das Reaktionsgas kann dabei gleichzeitig als Druckgas für die Wasserbehälter 7 und 9 dienen. Die Leitungen 6' und 8' sind Rückleitungen für überschüssiges Ozon.

Die Wasserozonisierung erfolgt bei dem dargestellten Beispiel nacheinander jeweils in einem Wasserbehälter 7 oder 9 oder einer Gruppe von solchen, so daß im Verlauf eines Behandlungsablaufs immer mindestens ein Behälter 7 oder 9 mit ozonisiertem Wasser der gewünschten Konzentration zur kontinuierlichen Entkeimung zur Verfügung steht.

Über die Wasserleitung 10 gelangt das ozonisierte Wasser aus dem Behälter 7 oder über die Wasserleitung 11 ozonisiertes Wasser aus dem Behälter 9 in einen Ozonwasserverteilungsblock 12, der über die Wasserleitung 13 auf der Arztseite die Wasserführung von Funktionsaggregaten, z.B. Bohrer 14 oder Püster 15 und über die Wasserleitung 16 Funktionsaggregate oder Geräte auf der Helferinnenseite, z.B. Speischale 17 und Püster 18, speist.

19 ist eine Steuerungseinheit, die über eine elektrische Steuerleitung 20 den Wasserfüllstand im Behälter 7 und über eine Steuerleitung 21 den des Behälters 9 regelt. Die Meldung über den Niedrigwasserstand erhält die Steuerungseinheit 19 also über die Leitungen 20 oder 21, worauf über eine Steuerleitung 22 ein Impuls an den Ozonwasser-Verteilungsblock 12 gelangt, der bei diesem Beispiel an das Leitungswassernetz angeschlossen ist und über die Leitungen 10 oder 11 im Rückfluß dem Behälter 7 oder 9 Frischwasser zuführt. Gleichzeitig oder danach gibt die Steuerungseinheit 19 über die Leitung 23 an den Steuerungsblock 5 den Befehl, mit der Ozonzufuhr in den jeweils frisch gefüllten Behälter 7 oder 9 zu beginnen. Natürlich kann die Frischwasserversorgung der Behälter 7 und 9 auch auf andere Weise geschehen und gesteuert werden.

24 ist ein z.B. potentiometrisch die $O_3$-Konzentration in der Leitung 16 messender Meßfühler, der über eine elektrische Steuerleitung 25 das gemessene Ergebnis an eine Steuerungseinheit 26 für die $O_3$-Konzentration meldet, die über eine Steuerleitung 27/28 das Ozonaggregat 1 und über die Leitung 27/29 den Steuerungsblock 5 in Tätigkeit setzt. Durch den Meßfühler 24 kann also die Ozonkonzentration kurz vor den Wasseraustrittsstellen gemessen werden. Sinkt diese auf $c_{03} \leqq$ 1mg $O_2$/1l $H_2O$ (potentiometrische Messung), so wird der jeweils andere Vorratsbehälter oder einer der weiteren Vorratsbehälter in den Wasserkreislauf eingeschaltet und die Regenerierung und Ozonung des Wassers in Gang gesetzt. Der Meßfühler 24 kann auch in die Leitung 13 auf der Arztseite geschaltet sein oder es kann in den beiden Leitungen 13 und 16 die $O_3$-Konzentration gemessen werden, aber bei Versuchen hat es sich herausgestellt, daß im Betrieb keine wesentlichen Abweichungen zwischen der Arztseite und der Helferinnenseite festzustellen sind und deshalb die Messung in einer der beiden Leitungen genügt. 30 ist ein Destruktor, der z.B. katalytisch das $O_3$ des überschüssigen Reaktionsgases zerlegt.

31 sind gegebenenfalls und dann sicherheitshalber eingebaute Restozonumwandler in den zu den Behandlungsaggregaten führenden Leitungen.

Die Erfindung schließt, wie bereits erläutert, ein, daß an den Wasseraustrittsstellen wahlweise $O_3$-Wasser entnommen werden kann, sei es z.B. zur Desinfektion der Speischale 17 an der Helferinnenseite der Dentaleinheit, sei es zur Munddesinfektion oder zu therapeutischen Zwecken an der Zahnarztseite, während an den Funktionsstücken, wie Turbine, Mikromotor usw. Trinkwasserqualität mit $c_{03} \leqq$ 0,05 mg $O_3$/1l $H_2O$ gewährleistet sein soll.

Kurz vor der entsprechenden Wasseraustrittsstelle wird deshalb im letztgenannten Fall, soweit noch vorhanden und erforderlich, das Restozon rückstandsfrei in $O_2$ zerlegt, was wahlweise

- thermisch,
- durch Ultraschall,
- mittels Mikrofilter,
- katalytisch (heterokatalytisch),
- durch zwischengeschaltete Mikrodüsen und Zerstäuber bzw.
- durch eine entsprechende Kombination

geschehen kann. Vor Funktionsstücken, die das durchfliessende Wasser mechanisch stark beanspruchen, z.B. Turbinen, ist eine besondere Restozonvernichtung in der Regel nicht erforderlich.

Die Bestimmung der Ozonkonzentration an den Wasseraustrittsstellen einer ozonwassergespülten Dentaleinheit nach der Erfindung bei drei verschiedenen Außentemperaturen (jodometrische Konzentrationsbestimmung) geht aus den Tabellen 2, 3 und 4 hervor. Diese enthalten die Meßergebnisse der Wasserproben an fünf verschiedenen Entnahmestellen, jeweils mit und ohne aufgestecktem Funktionsstück.

Die Konzentrationsmessung im Ozonwasserreservoir zu Beginn und nach 60 Minuten diente der Kontrolle.

Aus der Tabelle 2 (15°C) ist ersichtlich, daß im Falle des eingesetzten Systems ein Ozonverbrauch inklusive Ozonzerfall vom Wasserreservoir bis hin zur Entnahmestelle ohne zusätzliche Beeinflussung durch ein Funktionsstück oder zusätzliche Ozonvernichtung von 40 bis 50 % auftritt.

Nach der Tabelle 4 (25°C) beträgt der Ozonverbrauch 50 bis 70 %. Das Restozon dient der Desinfektion des Handstückes, der Desinfektion der Speischale oder der Mundhöhle oder wird in $O_2$ rückverwandelt.

Tabelle 2:
Ozonkonzentrationen an 5 verschiedenen Wasseraustrittsstellen einer zahnärztlichen Behandlungseinheit mit und
ohne Funktionsstück
Raumtemperatur: $15^{\circ}$ C

| Entnahmeort | ohne | mit Funktionsstück |
|---|---|---|
| Ozonwasser-Reservoir (sofort) | 14,16 mg $O_3$/l $H_2O$ | |
| Püster (Arzt) | 6,96 mg$O_3$/l $H_2O$ | 6,96 mg$O_3$/l $H_2O$ |
| Turbine | 7,68 mg$O_3$/l $H_2O$ | 0 mg$O_3$/l $H_2O$ |
| 1. Mikromotor | 7,20 mg$O_3$/l $H_2O$ | 0 mg$O_3$/l $H_2O$ |
| 2. Mikromotor | 6,96 mg$O_3$/l $H_2O$ | 0 mg$O_3$/l $H_2O$ |
| Ultraschall | 8,40 mg$O_3$/l $H_2O$ | 0 mg$O_3$/l $H_2O$ |
| Ozonwasser-Reservoir (nach 60') | 14,16 mg$O_3$/l $H_2O$ | |

Tabelle 3

| Raumtemperatur: 20 ° C | | |
|---|---|---|
| Entnahmeort | ohne | mit Funktionsstück |
| Ozonwasser-Reservoir (sofort) | 12,96 mg$O_3$/l $H_2O$ | |
| Püster (Arzt) | 5,52 mg$O_3$/l $H_2O$ | 5,52 mg$O_3$/l $H_2O$ |
| Turbine | 6,72 mg$O_3$/l $H_2O$ | 0 mg$O_3$/l $H_2O$ |
| 1. Mikromotor | 5,52 mg$O_3$/l $H_2O$ | 0 mg$O_3$/l $H_2O$ |
| 2. Mikromotor | 5,28 mg$O_3$/l $H_2O$ | 0 mg$O_3$/l $H_2O$ |
| Ultraschall | 6,48 mg$O_3$/l $H_2O$ | 0 mg$O_3$/l $H_2O$ |
| Ozonwasser-Reservoir (nach 60') | 12,72 mg$O_3$/l $H_2O$ | |

Tabelle 4

| Raumtemperatur: 25° C | | |
|---|---|---|
| Entnahmeort | ohne | mit Funktionsstück |
| Ozonwasser-Reservoir (sofort) | 11,04 mgO$_3$/l H$_2$O | |
| Püster (Arzt) | 2,88 mgO$_3$/l H$_2$O | 3,12 mgO$_3$/l H$_2$O |
| Turbine | 5,76 mgO$_3$/l H$_2$O | 0 mgO$_3$/l H$_2$O |
| 1. Mikromotor | 2,16 mgO$_3$/l H$_2$O | 0 mgO$_3$/l H$_2$O |
| 2. Mikromotor | 2,16 mgO$_3$/l H$_2$O | 0 mgO$_3$/l H$_2$O |
| Ultraschall | 3,36 mgO$_3$/l H$_2$O | 0 mgO$_3$/l H$_2$O |
| Ozonwasser-Reservoir (nach 60') | 10,56 mgO$_3$/l H$_2$O | |

Die Effizienz der Ozon-Desinfektion und die Überlegenheit gegenüber H$_2$O$_2$ zeigt Tabelle 1 an Pseudomonas aeruginosa. Den Konzentrationsabfall auf $c_{03}$ = 0 bzw. bei Bedarf $c_{03}$ > 0 an den Wasserentnahmestellen der Denleinheit veranschaulichen die Tabellen 2 bis 4.

Parallel an zwei Dentaleinheiten durchgeführte Untersuchungen ergaben den sehr geringen Wirkungsgrad einer Desinfektion mit H$_2$O$_2$/Ag$^+$.Hierzu wurde an einer Einheit ohne Wasserdesinfektion gearbeitet, die andere wurde mit einer kontinuierlichen Zudosierung von H$_2$O$_2$/Ag$^+$ betrieben. An allen Wasserentnahmestellen wurden täglich fünf Wasserproben analysiert und eine starke Verkeimung mit circadianen Schwankungen ermittelt (in der Mittagspause z.B. nimmt die Verkeimung wieder erheblich zu). Die ermittelten Keimzahlen lagen bis zu 1.000 mal höher als die durch die Trinkwasserverordnung festgelegte Grenze von 100 KBE/ml.

Es zeigen sich Unterschiede in der Keimzahlreduktion mit bzw. ohne Desinfektion in Abhängigkeit von der Nutzung, wie in Abbildung 2 am Beispiel einer Tagesmessung veranschaulicht.

Tabelle 5 zeigt dagegen die Wirkung von ozonisiertem Wasser als Desinfektionsmittel mit mit $c_{03}$ = 10 mg O$_3$/ml H$_2$O auf die Keimzahl in einer Dentaleinheit nach starker Verkeimung über das Wochenende. An allen fünf Entnahmestellen liegt die Keimzahl bereits nach der ersten Messung um 10.00 Uhr in dem nach der Trinkwasserverordnung zulässigen Bereich.

Tabelle 5

| Keimzahl (KBE/ml) montags zwischen 8.00 une 17.00 Uhr bei Desinfektion einer Dentalanlage durch Ozonwasser. | | | | | |
|---|---|---|---|---|---|
| Entnahmeort | Probenentnahme | | | | |
| | 8.00 | 10.00 | 13.00 | 15.00 | 17.00 Uhr |
| Püster | 31760 | 19 | 5 | 2 | 0 |
| Turbine | 28 | 0 | 0 | 0 | 0 |
| 1. Mikromotor | 17006 | 26 | 11 | 3 | 0 |
| 2. Mikromotor | 9608 | 2 | 0 | 0 | 0 |
| Ultraschall | 2706 | 9 | 1 | 0 | 0 |

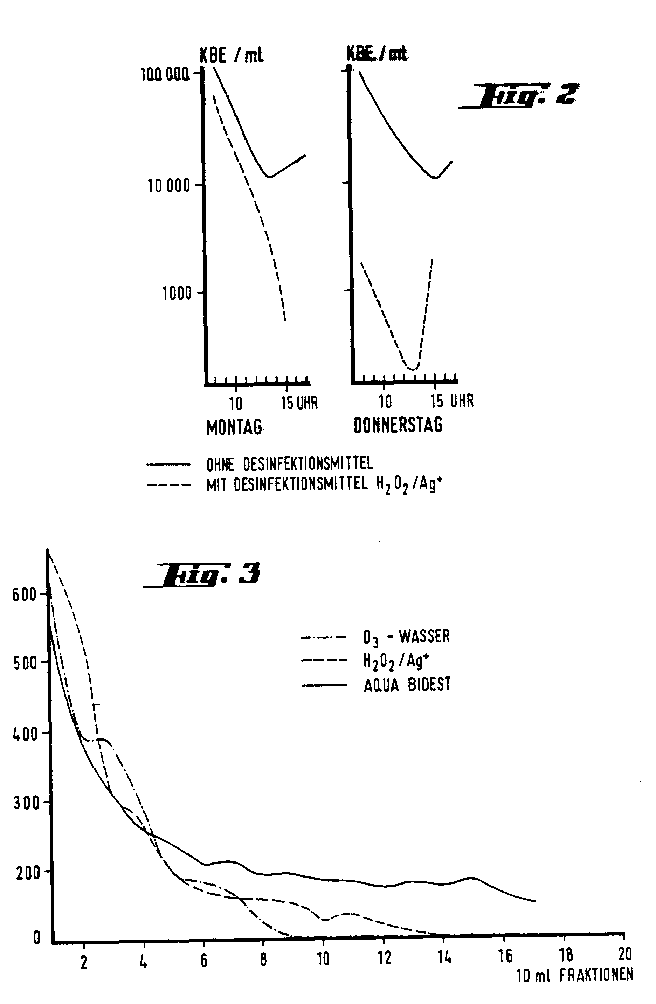

Das Diagramm in Abbildung 3 zeigt - ebenfalls jeweils montags - die Abnahme der Keimzahlen durch einfaches Ablaufenlassen des im Dentalstuhl stehenden Wasservolumens von 90 ml. Im Falle der Verwendung von Ozonwasser fällt die Keimzahl sofort auf Null, während für H$_2$O$_2$/Ag$^+$ und aqua bidest weitere Spülungen erforderlich sind.

**Patentansprüche**

1. Dentaleinheit, bestehend aus Behandlungsaggregaten und -geräten auf der Arzt- und Helferinnenseite, wie z.B. Turbine, Bohrer (14), Püster (15,18) und Speischale (17) und einem, mit den Aggregaten und Geräten verbundenen Wasserbehälter, mit dem für die Wasserentkeimung ein Ozon erzeugendes Aggregat (1) verbunden ist, dadurch **gekennzeichnet,** daß mindestens zwei Wasserbehälter (7,9) für die abwechselnde Wasserentnahme und Ozonisierung vorgesehen sind, daß zwischen das Ozonaggre-

7

gat (1) und die Wasserbehälter (7,9) ein bei frisch gefülltem Wasserbehälter die Ozoneinspeisung in Gang setzender und die Einhaltung eines vorbestimmten Konzentrationsbereichs bewirkender Steuerungsblock (5) geschaltet ist, und daß in mindestens einer Wasserleitung (13,16) auf der Arzt- und/oder Helferinnenseite ein Meßfühler (24) vorgesehen ist, der die Ozonkonzentration einer Steuerungseinheit (26) meldet, die das Ozonaggregat (1) und den Steuerungsblock (5) ansteuert.

2. Dentaleinheit nach dem Anspruch 1, dadurch **gekennzeichnet,** daß der Steuerungsblock (5) mit den Wasserbehältern (7,9) über Fülleitungen (6,8) und eine Rückstromleitung (6', 8') verbunden ist.

3. Dentaleinheit nach dem Anspruch 1, **gekennzeichnet** durch einen Ozonwasserverteilerblock (12), der stromabwärts der Wasserbehälter (7,9) zwischen diese und den Behandlungsaggregaten bzw. -geräten oder Wasserentnahmestellen geschaltet ist und von dem die Wasserleitungen (13,16) zur Arzt- und Helferinnenseite abgehen.

4. Dentaleinheit nach dem Anspruch 1, **gekennzeichnet** durch eine Steuerungseinheit (19) für den Füllstand in den Wasserbehältern (7,9), die nach Unterschreitung des Mindestwasserstandes dies dem auch an eine Frischwasserzufuhr angeschlossenen Ozonwasser-Verteilerblock (12) melden, der im Rückstrom durch die Leitungen (10,11) Frischwasser in die Behälter leitet.

5. Dentaleinheit nach dem Anspruch 4, dadurch **gekennzeichnet,** daß die Steuerungseinheit (19) über eine Leitung (23) auch den Steuerungsblock (5) ansteuert.

6. Dentaleinheit nach dem Anspruch 1, **gekennzeichnet** durch einen an den Steuerungsblock (5) über eine Leitung angeschlossenen Ozon-Destruktor (30).

7. Dentaleinheit nach dem Anspruch 1, dadurch **gekennzeichnet,** daß in die Wasserleitungen (13,16) auf der Arzt- und/oder Helferinnenseite Restozonumwandler (31) eingebaut sind.

8. Dentaleinheit nach dem Anspurch 1, dadurch **gekennzeichnet,** daß das Ozonaggregat (1) über eine Leitung (3) aus einem Vorrat (2) mit Sauerstoff oder Luft-$O_2$ gespeist wird.

9. Dentaleinheit nach den Ansprüchen 1 und 8, dadurch **gekennzeichnet,** daß das dem Vorrat (2) entnommene Reaktionsgas gleichzeitig Druckgas für die Wasserbehälter (7,9) ist.

10. Dentaleinheit nach den Ansprüchen 1 bis 9, **gekennzeichnet** durch eine Ozonkonzentration von 5 bis 15 mg $O_3$/1l $H_2O$.

**Claims**

1. Dental unit comprising treatment units and treatment devices on the practitioner and assistant's side, such as for example turbine, drill (14), air-blowing device (15, 18) and spittle bowl (17) and a water container connected to the units and devices and which is connected to a unit (1) producing ozone for water disinfection, characterised in that at least two water containers (7, 9) are provided alternately for water removal and ozonisation, in that a control block (5) effecting adherence to a predetermined concentration range and activating the ozone feed when the water container is freshly filled, is connected between the ozone unit (1) and the water container (7, 9), and in that a measuring sensor (24), which signals the ozone concentration to a control unit (26) which controls the ozone unit (1) and the control block (5), is provided in at least one water pipe (13, 16) on the practitioner and/or assistant's side.

2. Dental unit according to claim 1, characterised in that the control block (5) is connected to the water containers (7, 9) by means of filling pipes (6, 8) and a return pipe (6', 8').

3. Dental unit according to claim 1, characterised by an ozone water distributor block (12), which is connected downstream of the water containers (7, 9) between the latter and the treatment units or treatment devices or water removal points, and from which water pipes (13, 16) lead off to the practitioner and assistant's side.

EP 0 428 031 B1

4. Dental unit according to claim 1, characterised by a control unit (19) for the level in the water containers (7, 9), which signal to the ozone water distributor block (12) also connected to a fresh water supply, when the level goes below the minimum water level, and which passes fresh water into the containers by return flow through the pipes (10, 11).

5. Dental unit according to claim 4, characterised in that the control unit (19) also controls the control block (5) via a conductor (23).

6. Dental unit according to claim 1, characterised by an ozone destructor (30) connected to the control block (5) via a conductor.

7. Dental unit according to claim 1, characterised in that residual ozone converters (31) are incorporated into the water pipes (13, 16) on the practitioner and/or assistant's side.

8. Dental unit according to claim 1, characterised in that the ozone unit (1) is supplied with oxygen or air $O_2$ from a store (2) via a pipe (3).

9. Dental unit according to claims 1 and 8, characterised in that the reaction gas taken from the store (2) is at the same time the compressed gas for the water containers (7, 9).

10. Dental unit according to claims 1 to 9, characterised by an ozone concentration of 5 to 15 mg $O_3$/1 litre of $H_2O$.3

**Revendications**

1. Unité dentaire, constituée de groupes et d'appareils de traitement sur le côté du dentiste et de l'assistante, tels que turbine, fraise (14), souffleur (15, 18) et crachoir (17) ainsi que d'un réservoir d'eau relié aux groupes et appareils, auquel est relié un groupe (1) produisant de l'ozone pour la stérilisation de l'eau, caractérisée en ce que deux réservoirs d'eau (7, 9) au moins sont prévus pour le prélèvement d'eau et l'ozonisation alternatifs, en ce qu'entre le groupe d'ozone (1) et les réservoirs d'eau (7, 9) est monté un bloc de commande (5) mettant en marche l'alimentation d'ozone, lorsque le réservoir d'eau est fraîchement rempli et opérant le respect d'une gamme de concentrations prédéterminée, et en ce que dans au moins une conduite d'eau (13, 16) il est prévu sur le côté du dentiste et/ou assistante une sonde de mesure (24) qui signale la concentration d'ozone à une unité de commande (26) qui commande le groupe d'ozone (1) et le bloc de commande (5).

2. Unité dentaire selon la revendication 1, caractérisée en ce que le bloc de commande (5) est relié aux réservoirs d'eau (7, 9) par des conduites de remplissage (6, 8) et une conduite de retour (6', 8').

3. Unité dentaire selon la revendication 1, caractérisée par un bloc répartiteur d'eau à l'ozone (12), qui est monté en aval des réservoirs d'eau (7, 9), entre ceux-ci et les groupes ou appareils de traitement et à partir duquel les conduites d'eau (13, 16) partent vers le côté dentiste et assistante.

4. Unité dentaire selon la revendication 1, caractérisée par une unité de commande (19) pour le niveau de remplissage des réservoirs d'eau (7, 9), qui lorsque le niveau d'eau n'atteint pas le niveau minimal, signale ceci également à un bloc répartiteur d'eau à l'ozone (12), raccordé à une arrivée d'eau fraîche, lequel envoie aux réservoirs de l'eau fraîche en retour, à travers les conduites (10, 11).

5. Unité dentaire selon la revendication 4, caractérisée en ce que l'unité de commande (19) commande aussi le bloc de commande (5), par une ligne (23).

6. Unité dentaire selon la revendication 1, caractérisée par un destructeur d'ozone (30) raccordé au bloc de commande (5) par une ligne.

7. Unité dentaire selon la revendication 1, caractérisée en ce que dans les conduites d'eau (13, 16) des convertisseurs d'ozone résiduel (31) sont montés sur le côté dentiste et/ou assistante.

**8.** Unité dentaire selon la revendication 1, caractérisée en ce que le groupe d'ozone (1) est alimenté en oxygène ou O2 de l'air à partir d'une réserve (2), par une conduite (3).

**9.** Unité dentaire selon les revendications 1 et 8, caractérisée en ce que le gaz de réaction, prélevé de la réserve (2) sert en même temps de gaz comprimé pour les réservoirs d'eau (7, 9).

**10.** Unité dentaire selon les revendications 1 à 9, caractérisée par une concentration d'ozone comprise entre 5 et 15 mg O3/1l $H_2O$.

*Fig. 1*

**Fig. 2**

OHNE DESINFEKTIONSMITTEL

MIT DESINFEKTIONSMITTEL $H_2O_2/Ag^+$

**Fig. 3**

$O_3$ – WASSER

$H_2O_2/Ag^+$

AQUA BIDEST

10 ml FRAKTIONEN